# EUROPÄISCHE PATENTANMELDUNG

(11) **EP 2 450 577 A2**
(43) Veröffentlichungstag der Anmeldung: **09.05.2012**
(21) Anmeldenummer: 11187527.4
(22) Anmeldetag: 02.11.2011
(51) Int. Cl.: F15B 13/04

(54) **Hydraulisches Steuerventil mit einem in dessen hohl ausgebildeten Steuerschieber angeordneten vier Steuerkanten aufweisenden Vorsteuerkolben**

(30) Priorität: 05.11.2010 DE 102010050325
(71) Anmelder: Parker Hannifin Manufacturing Germany GmbH & Co. KG, 33659 Bielefeld (DE)
(72) Erfinder: Lehner, Thomas, 53937 Schleiden (DE); Baumanns, Frank, 47877 Willich-Anrath (DE); Vogel, Viktor, 41189 Mönchengladbach (DE); Krips, Walter, 41516 Grevenbroich (DE)
(74) Vertreter: Müller, Karl-Ernst

(57) **Zusammenfassung**

Ein hydraulisches Steuerventil mit einer einen in einem wenigstens vier Anschlüsse P, A, B, T aufweisenden Ventilgehäuse zur Sperrung beziehungsweise Freigabe der Anschlüsse verschiebbaren Steuerschieber aufweisenden Hauptstufe und mit einer für die Steuerung des Steuerschiebers der Hauptstufe vorgesehenen hydraulischen Vorsteuerstufe, wobei der Steuerschieber (17) der Hauptstufe zur Ausbildung der hydraulischen Vorsteuerstufe hohl ausgebildet und in dem im Steuerschieber (17) ausgebildeten Hohlraum ein von einem externen Antrieb verschiebbarer Vorsteuerkolben (20) mit einem gegenüber dem Hohlraum kleineren und dadurch einen Ringraum (21) ausbildenden Durchmesser angeordnet und relativ zum Steuerschieber (17) beweglich ist, wobei die Wandung des hohlen Steuerschiebers (17) mit einem zentralen Zuströmfenster (25) sowie beidseitig davon jeweils mit einem äußeren Abströmfenster (27) versehen ist und an dem Vorsteuerkolben (20) mit dem Zuströmfenster (25) und den Abströmfenstern (27) zusammenwirkende Steuerkanten ausbildende Kolbenbunde (22,28,36) angeordnet sind, und dass in dem Ventilgehäuse (10) zwei den Steuerschieber (17) an seinen stirnseitigen Enden einfassende und jeweils einen gehäuseseitig abgeschlossenen stirnseitigen Druckraum (30) für den Steuerschieber (17) schaffende Druckscheiben (26) angeordnet sind und der jeweilige Druckraum (30) über einen Zuströmweg mit dem Ringraum (21) verbunden ist.

## Beschreibung

Die Erfindung betrifft ein hydraulisches Steuerventil mit einer einen in einem wenigstens vier Anschlüsse P, A, B, T aufweisenden Ventilgehäuse zur Sperrung beziehungsweise Freigabe der Anschlüsse verschiebbaren und mit an Kolbenbunden ausgebildeten Steuerkanten versehenen Steuerschieber aufweisenden Hauptstufe und mit einer für die Steuerung des Steuerschiebers der Hauptstufe vorgesehenen hydraulischen Vorsteuerstufe.

Soweit der Steuerschieber eines hydraulischen Steuerventils zur Freigabe beziehungsweise Sperrung der Ventilgehäuseanschlüsse einer Ansteuerung bedarf, sind neben elektro-mechanischen Vorsteuerungen insbesondere auch hydraulisch arbeitende Vorsteuerstufen bekannt, bei denen ein mittels eines zugeordneten Antriebes gesteuerter Vorsteuerkolben einen den Steuerschieber der hydraulischen Hauptstufe beaufschlagenden und damit den Steuerschieber zwischen seinen Steuerstellungen bewegenden Strom an Hydraulikfluid regelt. Bei der Anordnung einer getrennt vom Ventilgehäuse der Hauptstufe angeordneten hydraulischen Vorsteuerstufe ergibt sich ein entsprechend großes Bauvolumen für ein derartiges hydraulisches Steuerventil und damit ein entsprechend großer Platzbedarf.

Der Erfindung liegt daher die Aufgabe zugrunde, ein hydraulisches Steuerventil mit einer hydraulischen Vorsteuerstufe zur Verfügung zu stellen, welches einen geringen Raumbedarf aufweist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der Steuerschieber der Hauptstufe zur Ausbildung der hydraulischen Vorsteuerstufe hohl ausgebildet und in dem im Steuerschieber ausgebildeten Hohlraum ein von einem externen Antrieb verschiebbarer Vorsteuerkolben mit einem gegenüber dem Hohlraum kleineren und dadurch einen Ringraum ausbildenden Durchmesser angeordnet und relativ zum Steuerschieber beweglich ist, wobei die Wandung des hohlen Steuerschiebers mit einem zentralen Zuströmfenster sowie beidseitig davon jeweils mit einem äußeren Abströmfenster versehen ist und an dem Vorsteuerkolben mit dem Zuströmfenster und den Abströmfenstern zusammenwirkende Steuerkanten ausbildende Kolbenbunde angeordnet sind, und dass in dem Ventilgehäuse zwei den Steuerschieber an seinen stirnseitigen Enden einfassende und jeweils einen gehäuseseitig abgeschlossenen stirnseitigen Druckraum für den Steuerschieber schaffende Druckscheiben angeordnet sind und der jeweilige Druckraum über einen die den Abströmfenstern zugeordneten Kolbenbunde des Vorsteuerkolbens überbrückenden Zuströmweg mit dem an das Zuströmfenster angeschlossenen Ringraum verbunden ist.

Mit der Erfindung ist zunächst der Vorteil verbunden, dass die Vorsteuerstufe in die Hauptstufe des hydraulischen Steuerventils hineinverlegt und damit der erforderliche Raumbedarf für das Steuerventil insgesamt reduziert ist. Hierzu macht sich die Erfindung in besonderer Weise das hydraulische Prinzip zunutze, dass die Vorsteuerstufe mit dem in beide axiale Richtungen verschiebbaren Vorsteuerkolben mit vier Widerständen, also zwei Widerständen in jeder Bewegungsrichtung des Vorsteuerkolbens, arbeitet. Die hydraulischen Widerstände bestehen erfindungsgemäß aus an dem hohlen Steuerschieber ausgebildeten Fenstern in Form von wenigstens einem Zuströmfenster und Abströmfenstern, denen an dem Vorsteuerkolben ausgebildete Kolbenbunde mit daran bestehenden Steuerkanten zugeordnet sind, so dass sich entsprechend der Stellung des Vorsteuerkolbens innerhalb des Steuerschiebers variabel zu steuernde Widerstände ergeben. Diese Widerstände sind entsprechend den jeweiligen Einsatzbedingungen für das hydraulische Steuerventil so festzulegen, dass einerseits eine möglichst verlustfreie Verschiebung des Vorsteuerkolbens durch den zugeordneten Antrieb möglicht ist, andererseits aber über einen genügend großen Fluiddurchfluss ausreichende Stellgeschwindigkeiten des Steuerventils erzielbar sind.

Nach einem Ausführungsbeispiel der Erfindung kann dabei vorgesehen sein, dass der Vorsteuerkolben einen den Druckraum und die zugehörige Druckscheibe in einer Lageröffnung durchsetzenden Kolbenbund aufweist und dass die Abströmfenster in dem Steuerschieber als in dessen Neutralstellung zum Tankanschluss offene Fenster ausgebildet sind, die in der Neutralstellung des Vorsteuerkolbens innerhalb des Steuerschiebers von dem zugeordneten Kolbenbund des Vorsteuerkolbens gesperrt sind. Bei einer Verschiebung des Vorsteuerkolbens ausgehend von seiner Neutralstellung wird über das von dem zugeordneten Kolbenbund freigegebene Zuströmfenster Hydraulikfluid in den Ringraum eingeleitet, wobei auf der in Bewegungsrichtung des Vorsteuerkolbens gelegenen Seite das zum Tank offene Abströmfenster des Steuerschiebers von dem zugeordneten Kolbenbund freigegeben wird.

Soweit es bei einer derartigen Ausgestaltung erforderlich ist, den außenliegenden Druckraum mit dem davon durch den Kolbenbund getrennten Ringraum zu verbinden, ist nach einem Ausführungsbeispiel der Erfindung vorgesehen, dass der Zuströmweg als eine einen Strömungsraum zwischen dem Vorsteuerkolben und dem Steuerschieber ausbildende Abflachung des Vorsteuerkolbens ausgebildet und das zugeordnete in dem Steuerschieber ausgebildete Abströmfenster mit einem Winkelversatz zu der an dem Vorsteuerkolben ausgebildeten Abflachung angeordnet ist, und dass eine Verdrehsicherung zur unverdrehbaren Führung des Steuerschiebers in dem Ventilgehäuse und des Vorsteuerkolbens gegeneinander in allen Steuerstellungen vorgesehen ist. Damit nicht das über die Abflachungen vom Ringraum in den Druckraum geführte Hydraulikfluid über die von dem Kolbenbund überdeckten Abströmfenster wegfließt, ist die gegeneinander versetzte Anordnung von Abflachungen und Abströmfenstern vorgesehen. Diese versetzte Anordnung bedingt jedoch auch das Vorsehen einer Verdrehsicherung, damit nicht bei den Steuerbewegungen sich Steuerschieber und Vorsteuerkolben gegeneinander verdrehen und somit die Abflachungen doch mit den Abströmfenstern einen offenen Strömungsweg bilden können.

Das Vorsehen einer Verdrehsicherung kann entfallen, soweit in einer alternativen Ausführungsform der Erfindung vorgesehen ist, dass der Zuströmweg als eine die den Abströmfenstern zugeordneten Kolbenbunde des Vorsteuerkolbens durchsetzende und den Druckraum mit dem Ringraum verbindende Bohrung ausgebildet ist, da die in den Kolbenbunden verlaufenden Bohrungen nicht in Verbindung mit den den Kolbenbunden zugeordneten Abströmfenstern gelangen.

Hinsichtlich einer alternativen Ausgestaltung des Zuströmweges kann nach einem Ausführungsbeispiel der Erfindung vorgesehen sein, dass der Zuströmweg als in der Wandung des Steuerschiebers verlaufende und den Druckraum mit dem Ringraum verbindende Bohrung ausgebildet ist. Auch auf diese Weise kann der jeweilige Kolbenbund des Vorsteuerkolbens über brückt werden.

In einer alternativen Ausführungsform ist hinsichtlich der Anordnung der Abströmöffnung sowie der Kolbenbunde an dem Vorsteuerkolben vorgesehen, dass die Abströmfenster in dem Steuerschieber in dessen Neutralstellung den Verbraucheranschlüssen A und B zugeordnet sind und an dem Vorsteuerkolben zwei Steuerkanten für die Abströmfenster ausbildende Kolbenbunde angeordnet ist, die in der Neutralstellung des Vorsteuerkolbens innerhalb des Steuerschiebers von dem zugeordneten Kolbenbund des Vorsteuerkolbens gesperrt sind. Hierbei macht sich diese Ausführungsform zunutze, dass in der jeweiligen, durch die Bewegung des Vorsteuerkolbens in dem Steuerschieber herbeigeführten Steuerstellung des Steuerschiebers immer einer der Verbraucheranschlüsse A beziehungsweise B mit dem Tankanschluss verbunden ist, so dass das bei der Verschiebung des Steuerschiebers aus dem Druckraum verdrängte Hydraulikfluid jeweils über den zugeordneten Verbraucheranschluss zum Tank abströmen kann.

Soweit es auch bei diesem Ausführungsbeispiel erforderlich ist, den jeweiligen zwischen dem an die Zuströmfenster angeschlossenen Ringraum und dem Druckraum gelegenen Kolbenbund zu überbrücken, kann entsprechend der bereits beschriebenen Ausgestaltung vorgesehen sein, dass der Zuströmweg als eine die den Abströmfenstern zugeordneten Kolbenbunde durchsetzende und den Druckraum mit dem Ringraum verbindende Bohrung ausgebildet ist.

Entsprechend kann in einer alternativen Ausführungsform wiederum vorgesehen sein, dass der Zuströmweg als an den den Abströmfenstern zugeordneten Kolbenbunden des Vorsteuerkolbens ausgebildete Abflachung ausgebildet ist und die zugeordneten in dem Steuerschieber ausgebildeten Abströmfenster mit einem Winkelversatz zu den an den Kolbenbunden des Vorsteuerkolbens ausgebildeten Abflachungen angeordnet sind, und dass eine Verdrehsicherung zur unverdrehbaren Führung des Steuerschiebers in dem Ventilgehäuses und des Vorsteuerkolbens gegeneinander in allen Steuerstellungen vorgesehen ist.

Gemäß einem Ausführungsbeispiel der Erfindung ist vorgesehen, dass über den Umfang des Steuerschiebers verteilt in symmetrischer Anordnung jeweils eine Mehrzahl von in den Hohlraum des Steuerschiebers führenden Zuströmfenstern und Abströmfenstern angeordnet ist.

Um den für die axiale Verschiebung des Steuerschiebers der Hauptstufe des hydraulischen Steuerventils erforderlichen Druckraum zu schaffen, ist nach einem Ausführungsbeispiel der Erfindung vorgesehen, dass die Druckscheiben eine umlaufende Vertiefung zur Aufnahme eines stirnseitigen axialen Vorsprungs des Steuerschiebers als Anschlag für die Endstellung des Steuerschiebers aufweisen, deren Tiefe so bemessen ist, dass in der Endstellung des Steuerschiebers ein Zwischenraum zwischen der Druckscheibe und der Stirnseite des Steuerschiebers als Druckraum bestehen bleibt.

In der Zeichnung sind Ausführungsbeispiele der Erfindung wiedergegeben, welche nachstehend beschrieben sind. Es zeigen:
- Fig. 1: Ein hydraulisches Steuerventil mit integrierter Vorsteuerstufe im Schnitt ohne Darstellung des zugeordneten Antriebs für die Vorsteuerstufe und sonstige, an einem Steuerventil vorzuse-hende Sicherheitseinrichtungen, die von der Erfindung nicht berührt sind,
- Fig. 2: den Gegenstand der Figur 1 in einer um 90° gedrehten Ansicht,
- Fig. 3: eine andere Ausführungsform eines Steuerschiebers mit einem darin befindlichen Vorsteuerkolben in einer lediglich schemati-schen Darstellung zum Einsatz in ein in Figuren 1 und 2 darge-stelltes Steuerventil.

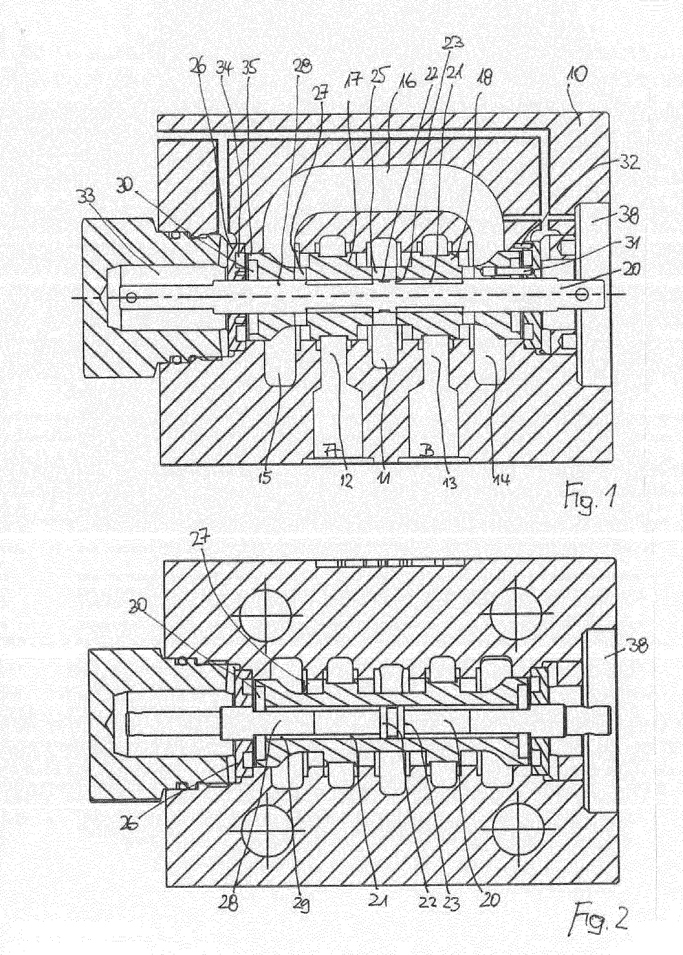

An dem aus Figuren 1 und 2 ersichtlichen Ventilgehäuse 10 eines hydraulischen Steuerventils sind vier Standardanschlüsse P, A, B, T ausgebildet, wie derartige Anschlüsse geläufig sind, von denen aber in der Zeichnung lediglich die Anschlüsse A und B sichtbar sind. In an sich bekannter Weise sind den Anschlüssen in dem Ventilgehäuse 10 jeweils Ringräume zugeordnet, und zwar ein Ringraum 11 für den Pumpenanschluss P, ein Ringraum 12 für den Verbraucheranschluss A und ein Ringraum 13 für den Verbraucheranschluss B. Weiterhin sind bei dem dargestellten Ausführungsbeispiel jeweils außenliegende Ringräume 14 und 15 angeordnet, die dem Tankanschluss T zugeordnet sind, wobei der Ringraum 14 unmittelbar mit dem Tankanschluss T verbunden sein kann, während der Ringraum 15 über eine interne Brücke 16 mit dem Ringraum 14 und damit mit dem Tankanschluss T verbunden ist.

Im Rahmen der insoweit bekannten Bauart eines Steuerventils ist in dem Ventilgehäuse 10 ein Steuerschieber 17 verschiebbar angeordnet, an welchem zwei Kolbenbunde 18 mit jeweils außenliegenden Steuerkanten angeordnet sind, wobei in der in der Zeichnung dargestellten Neutralstellung des Steuerventils die Kolbenbunde 18 die Ringräume 12 und 13 sperren. Bei einer Verschiebung des Steuerschiebers 17 erfolgt eine Verbindung des Ringraumes 11 entweder mit Ringraum 12 oder 13, wobei entsprechend der andere Ringraum 12 beziehungsweise 13 mit einem der Ringräume 14 beziehungsweise 15 verbunden ist. Auf diese Weise sind die Ringräume 12, 13 der Verbraucheranschlüsse A, B entweder mit dem Pumpendruck beaufschlagt oder mit dem Tankanschluss verbunden.

Zur Ausbildung einer hydraulischen Vorsteuerung ist der Steuerschieber 17 hohl ausgebildet und weist einen inneren Hohlraum auf, in welchem ein Vorsteuerkolben 20 relativ zum Steuerschieber verschiebbar angeordnet ist. Der Vorsteuerkolben 20 weist einen kleineren Durchmesser als der Hohlraum des Steuerschiebers 17 auf, so dass sich ein Ringraum 21 zum Durchfluss eines Hydraulikfluides ergibt.

An dem Vorsteuerkolben 20 ist ein Kolbenbund 22 mit außenliegenden Steuerkanten 23 angeordnet der mittig einen umlaufenden Einstich zum Druckausgleich aufweist. Der Kolbenbund 22 des Vorsteuerkolbens 20 wirkt mit bei dem dargestellten Ausführungsbeispiel zwei gegenüberliegend angeordneten Zuströmfenstern 25 des Steuerschiebers zusammen, die dem mit dem Pumpenanschluss P verbundenen Ringraum 11 zugeordnet sind, so dass das von der Pumpe herangeführte Hydraulikfluid jeweils an den Zuströmfenstern 25 des Steuerschiebers 17 ansteht. Erfolgt eine Verschiebung des Vorsteuerkolbens 20 aus der in der Zeichnung dargestellten Neutralposition nach links oder rechts, so gibt die zugeordnete Steuerkante 23 des Kolbenbundes 22 das jeweilige Fenster 25 frei, so dass in Abhängigkeit von der Stellung des Vorsteuerkolbens 20 in dem Hohlraum des Steuerschiebers 17 Hydraulikfluid in den Ringraum 21 einströmt.

Der von dem Steuerschieber 17 durchsetzte und bei seiner Steuerbewegung überstrichene Raum ist durch im Ventilgehäuse 10 gegenüber dem Ventilgehäuse dicht angeordnete Druckscheiben 26 verschlossen, so dass zwischen der Druckscheibe 26 und dem stirnseitigen Ende des Steuerschiebers 17 ein Druckraum 30 ausgebildet ist. Die Druckscheiben 26 weisen jeweils eine umlaufende Vertiefung 34 auf, die zur Aufnahme eines an der Stirnseite des Steuerschiebers 17 angeordneten, axial vorspringenden Vorsprunges 35 eingerichtet sind. Dabei ist die Tiefe der Vertiefung 34 im Verhältnis zur axialen Erstreckung des Vorsprunges 35 so bemessen, dass in der Endstellung des Steuerschiebers 17, in welcher dessen axialer Vorsprung 35 in die Vertiefung 34 der Druckscheibe 26 eingetreten ist, ein Zwischenraum zwischen der Druckscheiben 26 und der Stirnseite des Steuerschiebers 17 als Druckraum 30 bestehen bleibt.

Auf der dem Steuerschieber abgewandten Seite der Druckscheibe 26 ist in dem Ventilgehäuse 10 jeweils ein Funktionsraum 33 ausgebildet, der das Ende des Vorsteuerkolbens 20 aufnimmt. In dem Funktionsraum können weitere für das Verständnis der Erfindung nicht erforderliche Sicherheitseinrichtungen wie Rückstellfedern, Messsysteme oder dergleichen angeordnet sein.

Bei dem dargestellten Ausführungsbeispiel ist am rechten Ende des Vorsteuerkolbens 20 in dem Ventilgehäuse 10 eine Öffnung 38 für die Ankopplung eines externen, vorzugsweise elektro-mechanischen Antriebes für den Vorsteuerkolben 20 ausgebildet.

Wie sich aus einer Zusammenschau der beiden Figuren 1 und 2 ergibt, ist an dem Steuerschieber 17 jeweils ein zu dem jeweiligen Tankanschlussringraum 14 beziehungsweise 15 hin offenes Abströmfenster 27 ausgebildet, dem an dem Vorsteuerkolben 20 ein Kolbenbund 28 zugeordnet ist, der sich ausgehend von dem Ringraum 21 über die axiale Länge des Vorsteuerkolbens 20 durch die Druckscheiben 26 hindurcherstreckt, so dass der jeweilige Kolbenbund 28 gleichzeitig auch eine Lagerung und Führung des Vorsteuerkolbens 20 in den beiden äußeren Druckscheiben 26 bildet. Jeder Kolbenbund 28 ist dabei so ausgelegt, dass er in der in den Figuren 1 und 2 jeweils dargestellten Neutralstellung des Vorsteuerkolbens 20 innerhalb des Steuerschiebers 17 das zugeordnete Ausströmfenster 27 im Steuerschieber 1 7 sperrt.

Um einen Strömungsweg für die Zuströmung von Hydraulikfluid aus dem Ringraum 21 in den Druckraum 30 zu schaffen, sind an dem jeweiligen Kolbenbund 28 des Vorsteuerkolbens 20 einander gegenüberliegende Abflachungen 29 (Figur 2) ausgebildet, die einen Strömungsraum zwischen dem Kolbenbund 28 des Vorsteuerkolbens 20 und dem Steuerschieber 17 ausbilden und somit einen Zuströmweg für den Druckraum 30 schaffen.

Damit nicht bei der entsprechenden Beaufschlagung dieses Zuströmweges das Hydraulikfluid unmittelbar durch die Abströmfenster 27 entweicht, sind die Abflachungen 29 an dem Vorsteuerkolben 20 und die Anordnung der Abströmfenster 27 an dem Steuerschieber 17 jeweils um 90° gegeneinander versetzt, so dass kein offener Strömungsweg gebildet ist.

Um bei den Steuerbewegungen von Vorsteuerkolben 20 und Steuerschieber 17 ein Verdrehen der beiden Teile zueinander und damit die Schaffung eines offenen Strömungsweges zu verhindern, ist eine Verdrehsicherung der beiden Bauteile gegeneinander vorgesehen. Soweit der Vorsteuerkolben 20 im Inneren des Steuerschiebers 17 aufgrund seiner Ankopplung an einem nicht dargestellten externen Antrieb verdrehgesichert ist, ist für den Steuerschieber 17 im Ventilgehäuse 10 eine gesonderte Verdrehsicherung ausgebildet. Hierzu ist der Steuerschieber 17 mittels eines Stiftes 31 an der jeweiligen Druckscheibe 26 festgelegt, wobei die Druckscheibe 26 ihrerseits über einen weiteren Stift 32 in dem Ventilgehäuse 10 festgelegt ist, so dass über die beiden entsprechend vorgesehenen Stifte 31, 32 die Verdrehsicherung des Steuerschiebers 17 im Ventilgehäuse 10 verwirklicht ist.

Wird der Vorsteuerkolben 20 mittels des nicht dargestellten Antriebes aus der in der Zeichnung dargestellte Neutralstellung beispielsweise nach links verschoben, so gibt die in der Zeichendarstellung rechte Steuerkante 23 des am Vorsteuerkolben 20 ausgebildeten Kolbenbundes 22 die Zuströmfenster 25 in den Steuerschieber 17 frei, so dass von der Pumpe gefördertes Hydraulikfluid in den Ringraum 21 nach rechts einströmt. Von hier aus strömt das Hydraulikfluid über die in dem rechten Kolbenbund 28 des Vorsteuerkolbens 20 ausgebildeten Abflachungen 29 in den Druckraum 30, so dass sich in dem Druckraum 30 ein Druck aufbaut, der zu einer Verschiebung des Steuerschiebers 17 ebenfalls nach links führt. Auf der gegenüberliegenden linken Seite von Vorsteuerkolben 20 und Steuerschieber 17 muss entsprechend der Bewegung des Steuerschiebers nach links das dort in dem

Druckraum 30 anstehende Fluid verdrängt werden. Dieses Fluid kann über die in dem linken Kolbenbund 28 des Vorsteuerkolbens 20 angeordneten Abflachungen 29 in den Ringraum 21 zurückfließen. Da aufgrund der nach links versetzten Stellung des Vorsteuerkolbens 20 gegenüber dem Steuerschieber 17 die zugehörige Steuerkante des Kolbenbundes 28 das Abströmfenster 27 freigegeben hat, kann das aus dem linken Druckraum 30 verdrängte Hydraulikfluid nun über die Abflachungen 29, den Ringraum 21 und das Abströmfenster 27 in den Ringkanal 15 und über die interne Brücke 16 zum Tank abströmen.

Wie nicht weiter dargestellt, können die durch die Abflachungen 29 hergestellten Strömungswege auch durch in den Kolbenbunden 28 des Vorsteuerkolbens 20 angeordnete Bohrungen ersetzt sein, die den Ringraum 21 unmittelbar mit dem Druckraum 30 verbinden, wobei keine Verbindung zwischen den Bohrungen und den Abströmfenstern 27 gegeben ist. Zu- und Abströmung von Hydraulikfluid vollziehen sich wie beschrieben; allerdings ist in diesem Fall eine besondere Verdrehsicherung insbesondere des Steuerschiebers 17 im Ventilgehäuse 10 nicht erforderlich.

Gemäß einer ebenfalls nicht dargestellten Alternative können die durch die Abflachungen 29 hergestellten Strömungswege auch in die Wandung des Steuerschiebers 17 verlegt sein, indem dort wenigstens eine den Druckraum 30 mit dem Ringraum 21 verbindende Bohrung angeordnet wird.

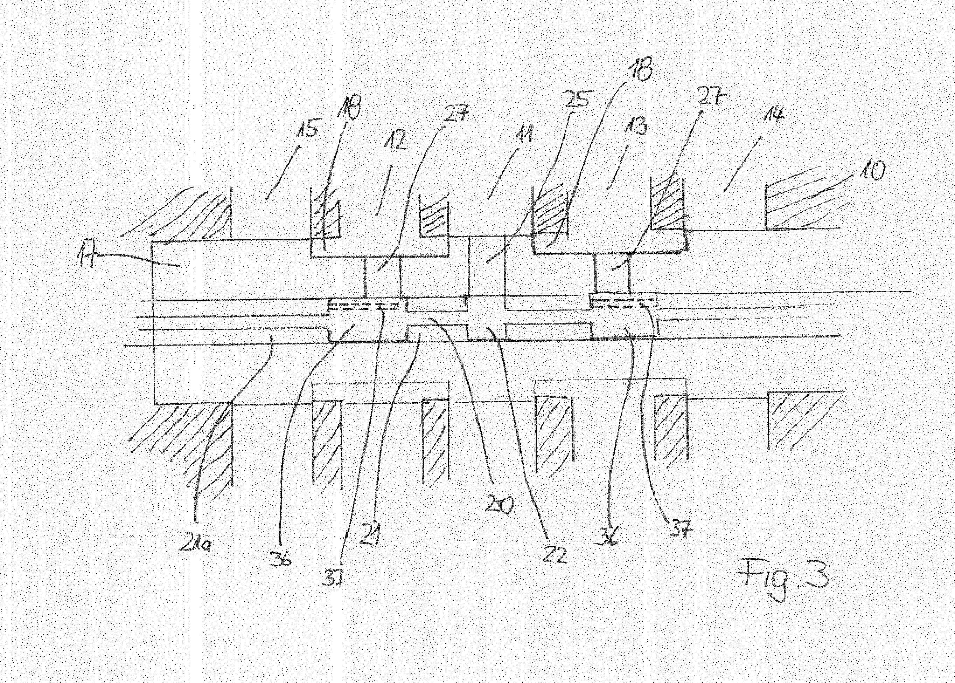

Das in Figur 3 dargestellte Ausführungsbeispiel unterscheidet sich von dem vorstehend zu Figuren 1 und 2 beschriebenen Ausführungsbeispiel dadurch, dass die erfindungsgemäßen Abströmfenster 27 in dem Steuerschieber 17 nun den Ringräumen 12 und 13 entsprechenden den Verbraucheranschlüssen A und B des Ventilgehäuses 10 zugeordnet sind. Da diesen Abströmfenstern 27 ebenfalls Steuerkanten am Vorsteuerkolben 20 zuzuordnen sind, weist der Vorsteuerkolben 20 jeweils einen den beiden Abströmfenstern 27 des Steuerschiebers 17 zugeordneten Kolbenbund 36 auf, die in der in Figur 3 dargestellten Neutralstellung des Vorsteuerkolbens 20 innerhalb des Steuerschiebers 17 die Abströmfenster 27 sperren. Aufgrund der Anordnung dieser beiden Kolbenbunde 36 ergibt sich ein zuströmseitiger Ringraum 21 und ein abströmseitiger Ringraum 21 a, der seinerseits mit dem jeweils außenliegenden Druckraum 30 verbunden ist. Um einen Zuströmweg von dem zuströmseitigen Ringraum 21 in den Druckraum 30 zu ermöglichen, sind bei dem in Figur 3 dargestellten Ausführungsbeispiel jeweils den Kolbenbund 36 durchsetzende Bohrungen 37 angeordnet, über die das Fluid jeweils strömen kann.

Die Steuerbewegungen vollziehen sich bei diesem Ausführungsbeispiel in gleicher Weise wie zu Figuren 1 und 2 beschrieben. Bei der entsprechenden Verstellung des Vorsteuerkolbens 20 innerhalb des Steuerschiebers 17 wird auf der Zuströmseite Fluid in den Ringraum 21 eingelassen, welches über die Bohrungen 37 in den druckseitigen Druckraum 30 fließt. Auf der anderen Seite kann das aus dem dortigen Druckraum 30 verdrängte Hydraulikfluid über die Bohrungen 37 des zugeordneten Kolbenbundes 36 in den Ringraum 21 fließen, der nun aber aufgrund der versetzten Stellung des Vorsteuerkolbens 20 gegenüber dem Steuerschieber 17 das zugehörige Abströmfenster 27 in den Steuerschieber 17 geöffnet hat, so dass eine Verbindung zwischen dem Ringraum 21 und dem zugeordneten Verbraucheranschluss A beziehungsweise B gegeben ist. Da in der entsprechenden Stellung des Steuerschiebers 17 der jeweilige Verbraucheranschluss mit dem Tank gekoppelt ist, erfolgt auch hier ein entsprechender Abfluss des aus dem Druckraum 30 verdrängten Fluides zum Tank.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Hydraulisches Steuerventil mit einer einen in einem wenigstens vier Anschlüsse P, A, B, T aufweisenden Ventilgehäuse zur Sperrung beziehungsweise Freigabe der Anschlüsse verschiebbaren und mit an Kolbenbunden ausgebildeten Steuerkanten versehenen Steuerschieber aufweisenden Hauptstufe und mit einer für die Steuerung des Steuerschiebers der Hauptstufe vorgesehenen hydraulischen Vorsteuerstufe, **dadurch gekennzeichnet, dass** der Steuerschieber (17) der Hauptstufe zur Ausbildung der hydraulischen Vorsteuerstufe hohl ausgebildet und in dem im Steuerschieber (17) ausgebildeten Hohlraum ein von einem externen Antrieb verschiebbarer Vorsteuerkolben (20) mit einem gegenüber dem Hohlraum kleineren und dadurch einen Ringraum (21) ausbildenden Durchmesser angeordnet und relativ zum Steuerschieber (17) beweglich ist, wobei die Wandung des hohlen Steuerschiebers (17) mit einem zentralen Zuströmfenster (25) sowie beidseitig davon jeweils mit einem äußeren Abströmfenster (27) versehen ist und an dem Vorsteuerkolben (20) mit dem Zuströmfenster (25) und den Abströmfenstern (27) zusammenwirkende Steuerkanten ausbildende Kolbenbunde (22, 28, 36)angeordnet sind, und dass in dem Ventilgehäuse (10) zwei den Steuerschieber (17) an seinen stirnseitigen Enden einfassende und jeweils einen gehäuseseitig abgeschlossenen stirnseitigen Druckraum (30) für den Steuerschieber (17) schaffende Druckscheiben (26) angeordnet sind und der jeweilige Druckraum (30) über einen die den Abströmfenstern (27) zugeordneten Kolbenbunde (28, 36) des Vorsteuerkolbens überbrückenden Zuströmweg mit dem an das Zuströmfenster (25) angeschlossenen Ringraum (21) verbunden ist.

2. Hydraulisches Steuerventil nach Anspruch 1, **dadurch gekennzeichnet, dass** der Vorsteuerkolben (20) einen den Druckraum (30) und die zugehörige Druckscheibe (26) in einer Lageröffnung durchsetzenden Kolbenbund (28) aufweist und dass die Abströmfenster (27) in dem Steuerschieber (17) als in dessen Neutralstellung zum Tankanschluss (14, 15) offene Fenster ausgebildet sind, die in der Neutralstellung des Vorsteuerkolbens (20) innerhalb des Steuerschiebers (17) von dem zugeordneten Kolbenbund (28) des Vorsteuerkolbens (20) gesperrt sind.

3. Hydraulisches Steuerventil nach Anspruch 2, **dadurch gekennzeichnet, dass** der Zuströmweg als eine einen Strömungsraum zwischen dem Vorsteuerkolben (20) und dem Steuerschieber (17) ausbildende Abflachung (29) des Vorsteuerkolbens (20) ausgebildet und das zugeordnete in dem Steuerschieber (17) ausgebildete Abströmfenster (27) mit einem Winkelversatz zu der an dem Vorsteuerkolben (20) ausgebildeten Abflachung (29) angeordnet ist, und dass eine Verdrehsicherung (31, 32) zur unverdrehbaren Führung des Steuerschiebers (17) in dem Ventilgehäuse (10) und des Vorsteuerkolbens (20) gegeneinander in allen Steuerstellungen vorgesehen ist.

4. Hydraulisches Steuerventil nach Anspruch 2, **dadurch gekennzeichnet, dass** der Zuströmweg als eine die den Abströmfenstern (27) zugeordneten Kolbenbunde (28) des Vorsteuerkolbens (20) durchsetzende und den Druckraum (30) mit dem Ringraum (21) verbindende Bohrung ausgebildet ist.

5. Hydraulisches Steuerventil nach Anspruch 2, **dadurch gekennzeichnet, dass** der Zuströmweg als in der Wandung des Steuerschiebers (17) verlaufende und den Druckraum (30) mit dem Ringraum (21) verbindende Bohrung ausgebildet ist.

6. Hydraulisches Steuerventil nach Anspruch 1, **dadurch gekennzeichnet, dass** die Abströmfenster (27) in dem Steuerschieber (17) in dessen Neutralstellung den Verbraucheranschlüssen A und B zugeordnet sind und an dem Vorsteuerkolben (20) zwei Steuerkanten für die Abströmfenster ausbildende Kolbenbunde (36) angeordnet ist, die in der Neutralstellung des Vorsteuerkolbens (20) innerhalb des Steuerschiebers (17) von dem zugeordneten Kolbenbund (36) des Vorsteuerkolbens (20) gesperrt sind.

7. Hydraulisches Steuerventil nach Anspruch 6, **dadurch gekennzeichnet, dass** der Zuströmweg als eine die den Abströmfenstern (27) zugeordneten Kolbenbunde (36) durchsetzende und den Druckraum (30) mit dem Ringraum (21) verbindende Bohrung (37) ausgebildet ist.

8. Hydraulisches Steuerventil nach Anspruch 6, **dadurch gekennzeichnet, dass** der Zuströmweg als an den den Abströmfenstern (27) zugeordneten Kolbenbunden (36) des Vorsteuerkolbens (20) ausgebildete Abflachung ausgebildet ist und die zugeordneten in dem Steuerschieber (17) ausgebildeten Abströmfenster (27) mit einem Winkelversatz zu den an den Kolbenbunden des Vorsteuerkolbens ausgebildeten Abflachungen angeordnet sind, und dass eine Verdrehsicherung zur unverdrehbaren Führung des Steuerschiebers in dem Ventilgehäuses und des Vorsteuerkolbens gegeneinander in allen Steuerstellungen vorgesehen ist.

9. Hydraulisches Steuerventil nach einem der Ansprüche 1 bis 8, **dadurch gekennzeichnet, dass** über den Umfang des Steuerschiebers (17) verteilt in symmetrischer Anordnung jeweils eine Mehrzahl von in den Hohlraum des Steuerschiebers (17) führenden Zuströmfenstern (25) und Abströmfenstern (27) angeordnet ist.

10. Hydraulisches Steuerventil nach einem der Ansprüche 1 bis 9, **dadurch gekennzeichnet, dass** die Druckscheiben (26) eine umlaufende Vertiefung (34) zur Aufnahme eines stirnseitigen axialen Vorsprungs (35) des Steuerschiebers (17) als Anschlag für die Endstellung des Steuerschiebers (17) aufweisen, deren Tiefe so bemessen ist, dass in der Endstellung des Steuerschiebers (17) ein Zwischenraum zwischen der Druckscheibe (26) und der Stirnseite des Steuerschiebers (17) als Druckraum (30) bestehen bleibt.
